# EUROPEAN PATENT SPECIFICATION

(11) **EP 0 716 978 B1**
(45) Date of publication and mention of the grant of the patent: **20.03.2002**
(21) Application number: 94120021.4
(22) Date of filing: 16.12.1994
(51) Int. Cl.: B64C 39/06

(54) **Large dimension aircraft**
Grossraumflugzeug
Avion de grandes dimensions

(43) Date of publication of application: 19.06.1996
(73) Proprietor: Frediani, Aldo, I-56124 Pisa - PI (IT)
(72) Inventor: Frediani, Aldo, I-56124 Pisa - PI (IT)
(74) Representative: Bardini, Marco Luigi

(56) References cited:
- EP-A- 0 619 224
- DE-U- 8 905 915
- US-A- 3 834 654
- JOURNAL OF AIRCRAFT, vol. 23,no. 3, March 1986 NEW YORK, USA, pages 161-178, WOLKOVITCH J. 'THE JOINED WING: AN OVERVIEW'

## Description

The present invention relates to a large transport aircraft. More particularly, the invention relates to a commercial transport aircraft with a passenger capacity greater than 450 seats.

Middle-term tendencies indicate a rapid growth in world air traffic with an expected doubling time of 20 years. Aircraft of the class of the Boeing 747 will already be too small at the end of the century, while it will not be possible to increase the frequency of flights very considerably, mostly because of the difficulties regarding air traffic around the largest airports.

The increase in the capacity of aircraft is also indicated by many airlines as the possibility to remain competitive on the international markets. Some companies have, furthermore, set out the main requisites for this new class of aircraft. Those requisites regard commercial aspects (improved passenger comfort and the possibility of operating from the already existing airport structures), economic aspects (reduction of fuel consumption per passenger and per km, increase of the operative life of the aircraft and lower investment and maintenance costs), and operative and environmental impact aspects (noise and air pollution). Similar considerations are valid for military transport and the transport of goods. Currently, the largest aircraft in use are, for heavy transport, the Antonov An225 with a maximum take-off weight (MTOW) of 600000 Kg, wing span of about 88 m and total length of about 84 m, and, for commercial transport, the Boeing 747-400 with MTOW of 395000 Kg, wing span of about 65 m and total length of about 71 m.

Research currently being carried out for the realization of an aircraft for commercial transport having a passenger capacity greater than the Boeing 747-400 is based on extending the traditional architecture of current aircraft to satisfy the new capacity needs and the above-mentioned requisites. For example, McDonnel-Douglas (W.J. Orlowski (Douglas Aircraft Co.)), in "A phased approach to introduce new high capacity aircraft," presented to the Royal Aeronautical Society in October 1993, proposes the MD12 transport aircraft. The MD12 is a four-engined aircraft with a fuselage divided into three levels, having the possibility of different configurations which can vary from 480 seats for a distance of 8100 nm (nautical miles) to 531 seats for distances of 7500 nm. For the long term, the company proposes a stretched version of the same MD12 to accommodate up to 700 passengers. No revolutionary technology is envisaged, but rather an evolution of technology resulting from improvements in aerodynamics, engines, systems and materials. The parts made of composite material are the complete vertical and horizontal tails, the control surfaces of the wings, the fillets, the engine nacelles and the radome. The same criteria for the use of innovative materials are adopted by the two large world aircraft manufacturers, Boeing and Airbus Consortium.

Boeing (J.B. Hayhurst (Boeing)), in "747 Derivatives," presented to the Royal Aeronautical Society in October 1993, foresees development of a stretched version of the 747-400 of the 500-seat class and a subsequent version of the 747-400 having more than 600 seats, for the meantime referred to as the "747-X New Airplane".

Airbus Consortium (J. Sozdruch (Airbus Industries)), in "Technical challenges for large aircraft", presented to the Royal Aeronautical Society in October 1993, proposes an aircraft having 600 seats with a bilobate fuselage and a double level of fin.

Notwithstanding the fact that these large aircraft have been proposed by constructors as simple extensions of currently existing vehicles, it is the applicant opinion that the adoption of traditional architectures will create strong limitations including those derived from dynamic overstress, static and dynamic aeroelastic phenomena, drastic reduction of structural efficiency, etc. For this reason, the expansion from the current class of 400-500 seats to that of 600 and more seats will involve considerable design problems, especially with regard to the wings.

Important problems in the introduction into service of a large aircraft also regard the structural limitations of airports and the problems of maneuverability on the ground in relation to embarking/disembarking of passengers and goods; in this respect, it is important to keep in mind that in order for the new aircraft to be considered compatible with the airport areas which will be made available in the near future, they must not exceed a planar dimension of 80X80 m. Other significant limitations regard the vertical fin, the height of which must be such that the aircraft can enter the existing hangars to make maintenance operations possible.

From the combination of the above-mentioned problems, it follows that a large aircraft of the future for the transport of passengers, goods and military equipment and personnel cannot be derived as an extension of a class of smaller aircraft, since the process of increasing the dimensions of a traditional aircraft has already reached its limit in the class of aircraft currently in service.

Non conventional aircraft configurations were also proposed in the past. US Patent No. 3,834,654 by Miranda discloses an aircraft wherein the forward wing is low and connected to the fuselage, the rear wing being high and mounted on top of fin. This aircraft is basically a fighter small aircraft with totally different problems of dimensions, stability, controls, etc. than those of a large aircraft; for example, a very large aircraft in which a wing is connected to the top of fin is subjected to static and flutter problems. A transport aircraft with a box-like wing configuration is also reported in J. Wolkowitch, The Joined Wing: An Overview, Journal of Aircraft, pagg. 161-178, 23 (1986) Mar., No. 3, New York, U.S.A.. In this case the study was based on an aircraft with conventional fuselage having circular cross section and mutually opposed swept wings. The rear wing was connected to the top of the fin. US Patent No. 3,942,747 by Volokowitch discloses a diamond-shaped configuration, in which the wings are connected together at their tips and the rearward wing is connected to the fin. This solution does not make reference to the Prandtl best wing theory.

EP-A-0619224 by Eger discloses a light-duty box-wing aircraft with upper and lower wings connected at their tips by pylons and spaced apart along the longitudinal axis. The wings have mutually opposite sweeps. The lower wing is connected at an intermediate part of the fuselage, while the upper wing is connected to a ring housing a pusher propeller mounted on the rear portion of the fuselage. The upper wing extends from the ring at a level well above the level of the fuselage. This solution is suggested for a small-size and subsonic aircraft and would give rise to unacceptable low-speed flutter problems, if applied to a large, transonic aircraft.

The main object of the present invention is to provide a transport aircraft having a load capacity adequate for the above-mentioned air traffic needs of the near future.

Another object of the present invention is to provide an aircraft of the above-mentioned type whose architecture would be such that the resulting wing span is of minor width with respect to that resulting from the expansion of conventional architecture aircraft.

A further object of the present invention is to provide an aircraft of the above-mentioned type with the fin having a total height from the ground lower than that of conventional aircraft of equal capacity.

Another object of the present invention is to provide an aircraft of the above-mentioned type having an aerodynamic efficiency not lower than that of current aircraft while having a shorter total wing span than current aircraft.

Another object of the present invention is to provide an aircraft of the above-mentioned type, the configuration of which is such that it eliminates problems related to static and dynamic aeroelastic phenomena.

Yet another object of the present invention is to provide an aircraft of the above-mentioned type wherein the wing structures are constructed with innovative materials and technology in order to increase their safety with regard to phenomena of fatigue and collapse due to fracture and to achieve a considerable decrease of structural weight and costs of production and maintenance.

These objects are accomplished by the aircraft according to the present invention, the features of which are set forth in claim 1. Preferably, the wing nearer to the front of the fuselage is positioned at a higher level than the wing nearer to the rear of the fuselage and, in a particularly preferred embodiment of the invention, the two rigid aerodynamic surfaces connect the two wings at their tips keeping them spaced from one another.

Further characteristics arid advantages of the aircraft according to the present invention will be made apparent in the description which follows of one of its possible embodiments, given as an example and not limitative, with reference to the attached drawings in which:

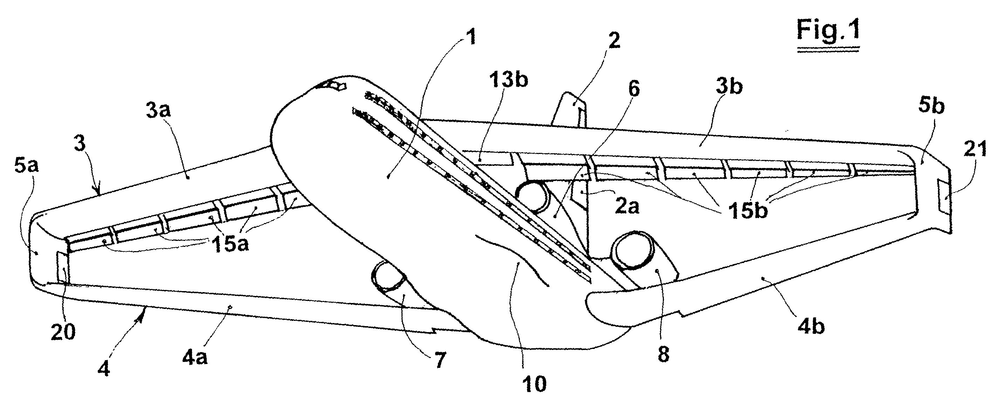

- figure 1 is a bottom front perspective view of a currently preferred embodiment of the aircraft according to the present invention;

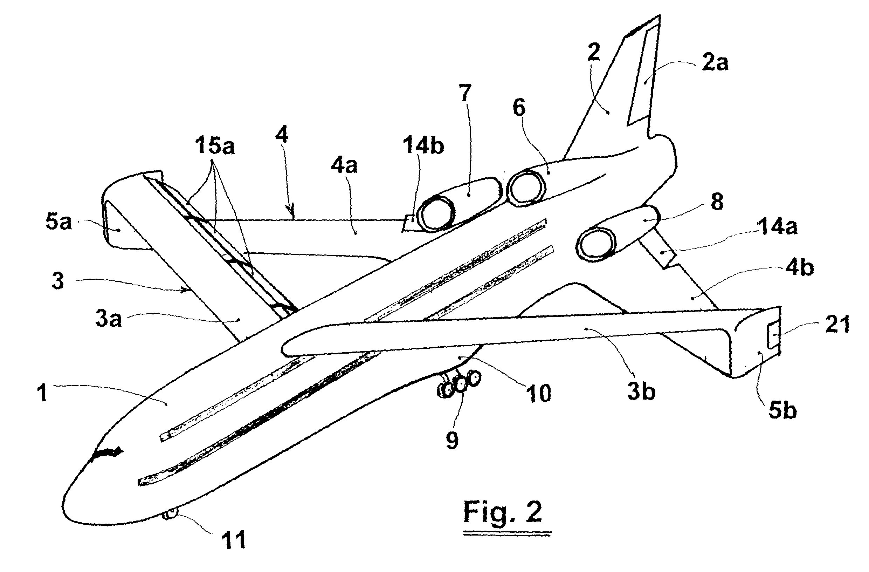

- figure 2 is a top front perspective view of the aircraft of figure 1;
- figure 3 is a front view of the aircraft of figure 1;
- figure 4 is a top plan view of the aircraft of figure 1;
- figures 5, 6 and 7 illustrate schematically three possibilities for the connection of the tips of the wings by means of rigid aerodynamic surfaces;
- figures 8a, 8b and 9a, 9b show, in a perspective view and front view respectively, two further possible ways of connecting the main planes with said surfaces.

With reference to the above-mentioned figures, a multi-defuselage of the aircraft according to the invention is indicated with 1 and the vertical tail plane or fin is indicated with 2 and is provided with a moveable control surface or rudder 2a. From an intermediate point along the longitudinal axis of fuselage 1, a first wing 3 extends formed by two halfwings 3a and 3b swept backward from the fuselage. From the fuselage, in correspondence with its rear portion, a second wing 4 extends formed by two halfwings 4a and 4b sweeping forward, toward the front of the fuselage. Wings 3 and 4 lie on two different planes that are spaced with respect to the longitudinal axis of fuselage 1 and, in particular, first wing 3, or the forward wing, is higher than second wing 4, or the rearward wing. Wings 3 and 4 are also connected to one another in correspondence with the tips of their respective halfwings, 3a, 4a and 3b, 4b lying on the same side of the fuselage, by means of two aerodynamic surfaces 5a and 5b which are rigid in their plane. Rigid aerodynamic surfaces 5a and 5b are suited to decrease the induced drag and, also, to transmit internal forces and provide kinematic constraints between the wings themselves. Preferably, aerodynamic surfaces 5a and 5b are provided with moveable control surfaces 20 and 21.

On the rear part of the fuselage, in correspondence with the fin 2, a first engine 6 is provided for in a central position, while two additional engines 7 and 8 are provided for, next to engine 6, on each side of fuselage 1. According to the capacity of the aircraft, the choice of engines and the existing regulations regarding safety criteria during take-off and landing in case of failure of one of the engines, each engine can be substituted by a pair of flanked engines. In this way, a three engine configuration (as in the embodiment illustrated), a five engine configuration (two engines in each of positions 7 and 8 and one engine in position 6) and a six engine configuration (two engines in each of positions 6, 7 and 8) can be obtained. In the case of two engines in position 6, said engines are preferably positioned on the two sides of the fin 2 at the same height.

The aircraft also comprises a nose landing gear 11 of a conventional type and main landing gear (indicated schematically with 9 in the figures) preferably positioned inside the fuselage in special nacelles 10 close to the center of gravity of the aircraft. On wings 3 and 4, in proximity to each of the two sides of the fuselage, moveable surfaces 13a, 13b and 14a, 14b are provided for having a function which will be described further on; while flaps 15a, 15b are provided along the remaining part of forward wing 3. Further flaps 16a, 16b are provided for on rearward wing 4.

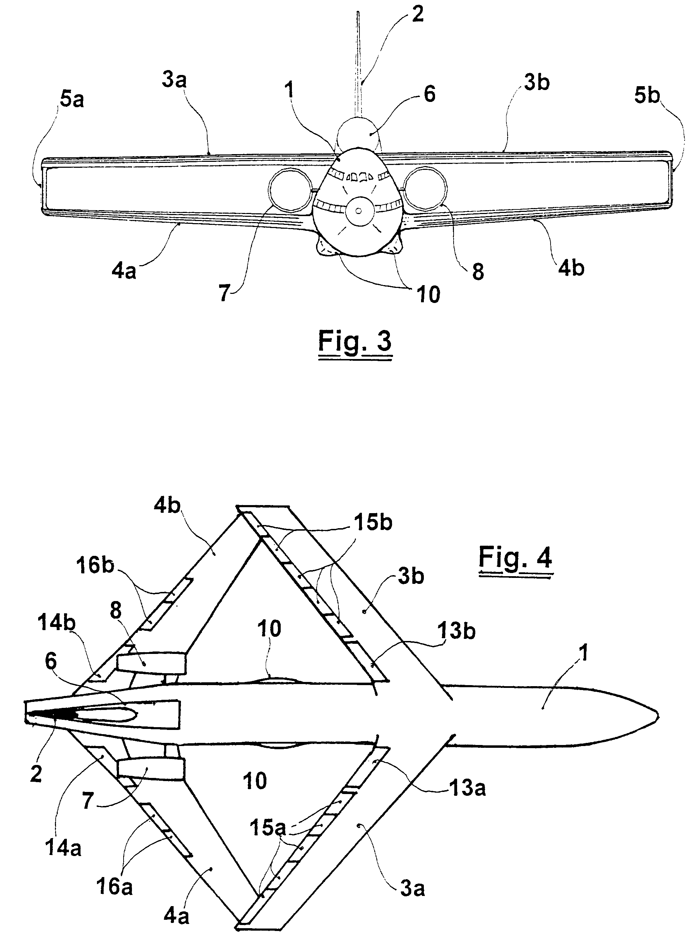

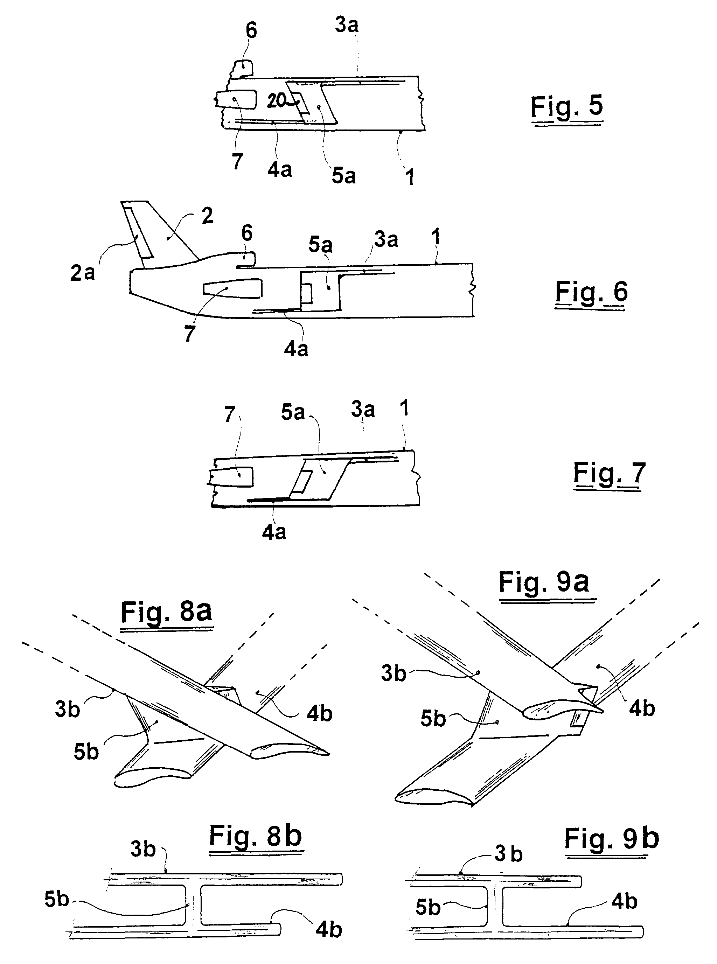

Both wings 3 and 4 are generally positioned with a dihedral angle. The forward wing 3, in particular, may have a positive, negative or zero dihedral angle as a function of the lateral stability; the choice of a positive dihedral angle on the forward wing makes it possible to prevent the slip stream of said wing from striking the air intakes of engines 7 and 8. Rearward wing 4 has a positive dihedral angle (as illustrated in figure 3), not only for reasons of lateral stability, but also to avoid impact of the tips of the wings with the ground during bank landing.

The wing configuration of the aircraft according to the present invention allows for an expansion of the load capacity of fuselage 1, while keeping the wing span within the dimensional limits compatible with airport areas and without decreasing the aerodynamic efficiency compared to aircraft of conventional architectures. Additionally, it allows for the transmission of lift forces to the fuselage through a plurality of load paths; this increases the capacity of damage tolerance to the aircraft wings also in the presence of damage due to fatigue, projectile holes, etc., and, therefore, the safety of the wings themselves with regard to fatigue and fracture in comparison to conventional wings is also increased.

As previously remarked, the forward and rearward wings do not converge at their tips, as in the wing configuration models such as the "diamond" configuration (see, for example, US-A-4365773), but are spaced by aerodynamic surfaces 5a and 5b. In this way, it is possible to decrease or eliminate the aerodynamic interference between the wings, especially in the area of their tips. Furthermore, the possible presence of control surfaces 20 and 21 in elements 5a and 5b allows for the application of pure lateral forces also for the lateral-directional control.

Aerodynamic surfaces 5a and 5b can have different forms as illustrated in figures 5, 6 and 7 according to whether the tips of the wings are vertically aligned or vertically staggered with respect to each another. In this way, it is possible to axially translate, in the design stage, the forward and/or rearward wing without varying the geometry in relation to the center of gravity of the aircraft.

Surfaces 5a and 5b can also connect the wings in a section that is not the tip, as illustrated in figures 8a, 8b and 9a, 9b. In particular, the two wings can both be connected in two of their intermediate sections, and one wing can be longer than the other. The solutions in figures 8 and 9 are introduced to allow a larger variety of design choices and, above all, to minimize the induced drag. Furthermore, they allow for a wider choice of relationships between the surfaces of the forward and rearward wings in order to satisfy the static stability requirements. In this way, it is possible to optimize the position of surfaces 5a and 5b along the span in order to decrease the stress states or vary the vibration frequency of the wings themselves.

The presence of aerodynamic surfaces 5a and 5b makes it possible to preload the wings by introducing self-balancing prestressed states of a bending and torsional type of opposite signs on the forward and rearward wings. In the more heavily loaded wing, during flight, a prestressed status compatible with the overload of the other wing and suitable to create compression tensions in the wing underside, which is kept taut under positive load factors, can be introduced. This makes it possible to reduce the maximum operating stresses and the amplitudes of the fatigue loads under tension stress, with the advantage of obtaining better characteristics of weight efficiency and fatigue life. This possibility of introducing appropriate residual stresses is not possible in any of the conventional configurations of large aircraft. In the aircraft of the present invention, each prestressed status in the wings can be introduced by "shortening" or "elongation" of surfaces 5a and 5b to obtain the components of prestressing forces, and by relative rotations between the wings obtained in the connection of the same to surfaces 5a and 5b to obtain prestressing torques.

The forward wing is preferably situated at a higher level than the rearward wing in order to prevent, for certain sizes of aircraft, the forward wing from putting the rearward wing in the slip stream during flight with a high angle of attack (such as during take-off and landing) which would make control of the aircraft difficult in those situations. This configuration is preferable also because the positioning of the rearward wing higher than the forward wing would make the installation of central engine 6 more problematic in cases in which that engine is necessary. This solution, furthermore, makes it possible to limit the height of the landing gear, since the flaps on the higher wing do not interfere with the ground; this feature, along with the smaller dimensions of the fin made possible by the decreased penalization of flight with a collapsed engine (in turn derived from the position of the engines on the fuselage instead of on the wing), allows for the reduction of the height off the ground of the aircraft according to the invention compared to conventional aircraft.

The absence of any considerable aerodynamic interference between the rearward wing and the fin, furthermore, makes it possible to correctly command rudder 2a. Additionally, a possible connection of the rearward wing and the fin (as in US-A-4365773), on top of problems of aerodynamic interference between the wing itself and engine 6, tends to make the rearward wing flexible due to lateral movements, thus introducing possible aeroelastic and dynamic phenomena that are potentially dangerous for the structural safety of the aircraft and comfort of the passengers; said inconveniences do not exist with the wing configuration of the aircraft according to the present invention. A further inconvenience of US-A-4365773 lies in the "diamond" configuration of the wings. In fact, based on studies conducted by Prandtl in the 1920's, the induced drag of a biplane aircraft with the same lift and wing span of a conventional aircraft is lower than that of the conventional aircraft, and tends toward half of the value of a traditional aircraft when the distance between the two wings of the biplane tends to infinity. This property does not depend on the sweep of the wings. This makes it possible to decrease the drag of the biplane aircraft with respect to the conventional monoplane aircraft when the same wing span is maintained, or it is possible to reduce the wing span (an important requisite for large aircraft of the future), while maintaining the same drag.

The "diamond" configurations do not offer this possible and substantial advantage.

A solution with the forward wing low and the rearward wing high but bound to the fuselage is equivalent to that with a low reaward wing and high forward wing from an aerodynamic (except a different ground effect) and structural standpoint and, therefore, falls within the spirit and scope of the present invention.

It should, furthermore, be noted that the wing configuration of the aircraft according to the present. invention is such that the static aeroelastic problems relative to the forward wing are solved by the presence of the connection with the rearward wing and vice versa. For example, the problem of torsional divergence of wing 4 sweeping forward can be solved by the stabilizing effect of wing 3 sweeping backward, connected to the former by means of surfaces 5a and 5b. Furthermore, the problems of a decrease of aileron efficiency of the back sweeping wing which, in the case of wings with a large sweep angle could produce a low aileron reversal speed, can be solved by positioning the aileron controls 16a and 16b on the forward sweeping wing which, as known, has a high aileron efficiency. Said high efficiency allows for the design of reduced surface controls and, therefore, simpler and lighter than those of conventional aircraft.

The particular wing configuration of the aircraft according to the present invention allows for a pure pitch longitudinal control by means of opposite rotations of moveable surfaces 13a, 13b on the forward wing and 14a, 14b on the rearward wing. The moveable surfaces are of a limited width, given the large distance between the surfaces themselves. The pure pitch can also be associated with a lift; by partializing the front or rear moveable surfaces, the lift associated with the torque can be positive or negative. A pure pitch control is not possible with any conventional aircraft.

Flaps 15a and 15b are located on the back sweeping wing and extend along a large part of the wing span; in that way, with the flaps extended, it is possible to obtain a distribution of lift more similar to an elliptical shape, and, therefore, of minimum induced drag during take-off and landing, as opposed to conventional aircraft. Said flaps can have a chord which is variable in relation to the tapering of the wing and can be extracted along the opening in such a way as to obtain a wing which, with flaps extended, has a reduced sweep compared to that with the flaps retracted; this possibility is particularly useful at low velocities and can be obtained with flaps of a shorter chord than those of conventional aircraft. Furthermore, with the flaps extended, a lower momentum of aerodynamic force is obtained than in conventional aircraft, both because of the geometry of the flaps and because the wing has a much smaller surface area (about half) than that of conventional aircraft. Yet another advantage consists in the possibility of obtaining higher maximum lift coefficients during landing, allowing for landing at a lower velocity than conventional aircraft and for a smaller stall velocity value. The location of main landing gear 9 inside the fuselage, even if it makes the structure of the same more complex, makes it possible to obtain many advantages both in terms of wing design as well as in terms of comfort of the passengers and crew during landing. In fact, if landing gear 9 were located on rear wing 4, the most limiting design condition of the wing would be that of the rotation of the gear before climb, with consequent low efficiency in cruise. Additionally, during landing, the linear and external accelerations which the pilot and the passengers in the front of the fuselage are subjected to would be considerable due to the distance of their masses from the landing gear. It should be noted that having freed the rear wing (just as the front wing) from concentrated forces produced by the landing gears and engines, it can be more easily made with innovative materials, such as composites, as will be discussed further ahead.

In the configuration of the present invention, during cruise or any other condition of flight, a subdivision of the forces of lift between the two wings occurs, and both become lifting.

Another advantage of the aircraft according to the present invention consists in the fact that since the wings are aerodynamically clean and of lower lengthening, with the elimination of aero-elastic phenomena, the absence of the connections of the engines and landing gear and the simplification of the control surfaces they can be constructed in innovative materials. In particular, said wings can be realized in composite materials, Glare® laminated materials and the like, or combinations of the two materials obtained by means of layers of glass fibers combined with layers of composite and Glare®, with a reduction of weight as well as of costs compared to conventional configurations. The use of Glare® or similar materials as the skins of the wings also makes it possible to resolve the problems resulting from impacts and assures protection from lightening as well as a high quality surface finish. This aspect, along with that of a smaller aerodynamic chord than current aircraft, allows for use of special airfoils, called laminar airfoils, which make it possible to maintain the boundary layer under laminar flow condition, with a low friction coefficient, along a considerable portion of the chord; contrary to conventional aircraft.

Finally, the fuselage is composed of three or more decks; in the case of commercial transport, the lowest deck is reserved essentially as a space for luggage and goods, whereas the upper decks are assigned to the transport of passengers. The configuration according to the present invention allows for an increase of the volumes available, with any other dimension of the fuselage being the same, as a consequence of the smaller portion of the fuselage crossed by the wings.

## Claims

1. A large transport aircraft for load capacities greater than 450 seats, comprising a fuselage (1) having multiple passenger decks and a fin (2), a first wing (3) extending from an intermediate point on said fuselage (1), a second wing (4) extending from the rear portion of said fuselage, said first and second wings lying on two vertically spaced planes, said first wing (3) being formed by two halfwings (3a, 3b) sweeping towards the rear of said fuselage, said second wing (4) being formed by two halfwings (4a, 4b) sweeping towards the front of the fuselage, said first and second wings being connected to one another by respective rigid aerodynamic surfaces (5a, 5b) in correspondence with the respective halfwings lying on the same side of the fuselage, **characterized in that** said one of the first and second wings extend from the top portion of the fuselage and the other one extend from the bottom portion of the fuselage.

2. Aircraft according to claim 1, wherein said first wing (3) is situated at a higher level than said second wing (4).

3. Aircraft according to claim 1, wherein said first wing (3) is situated at a lower level than said second wing (4).

4. Aircraft according to the previous claims, wherein said aerodynamic surfaces (5a, 5b) are connected to the tips of the respective halfwings.

5. Aircraft according to claims 1, 2 and 3, wherein said aerodynamic surfaces (5a, 5b) are respectively connected to an intermediate point of at least one of said halfwings.

6. Aircraft according to the previous claims, wherein said rigid aerodynamic surfaces (5a, 5b) have moveable control surfaces (20, 21).

7. Aircraft according to the previous claims, wherein said second wing (4) has a positive dihedral angle.

8. Aircraft according to the previous claims, wherein said first wing (3) has a positive dihedral angle.

9. Aircraft according to claim 1, wherein a main landing gear is housed in the fuselage in proximity to the barycenter of the aircraft.

10. Aircraft according to claim 4, wherein the tips of the halfwings (3a, 4a and 3b, 4b) connected by said aerodynamic surfaces (5a, 5b) are vertically aligned or staggered with respect to one another.

11. Aircraft according to claim 5, wherein one of said first or second wings is longer than the other to which it is connected at an intermediate point by means of the respective aerodynamic surfaces.

12. Aircraft according to the previous claims, wherein said first and second wings (3, 4) are preloaded with self-balancing prestressed status of opposite signs and of a flexural and torsional type by means of said aerodynamic surfaces (5a, 5b).

13. Aircraft according to the previous claims, wherein, on said second wing (4), moveable surfaces (16a, 16b) are positioned for lateral-directional controls.

14. Aircraft according to the previous claims, wherein wing flaps (15a, 15b) are provided for on a large part of said first wing (3), so that the distribution of lift with the flaps extended approximates an elliptical form.

15. Aircraft according to the previous claims, wherein the wings are formed in composite material, laminated materials, and/or a combination of the two.

16. Aircraft according to the previous claims, wherein, on said first wing (3) and said second wing (4), on each side of the fuselage and in proximity to it, moveable control surfaces (13a, 13b, 14a, 14b) are provided for.

## Patentansprüche

1. Großraumflugzeug mit einem Fassungsvermögen von mehr als 450 Sitzplätzen, mit mehreren Passagierdecks, mit einem Seitenleitwerk (2), mit einem ersten Flügel (3), der sich von einem Zwischenpunkt auf dem Rumpf (1) aus erstreckt, einem zweiten Flügel (4), der sich vom hinteren Teil des Rumpfes aus erstreckt, wobei erster und zweiter Flügel in zwei vertikal voneinander beabstandeten Ebenen liegen, wobei der erste Flügel (3) von zwei Halbflügeln (3a, 3b) gebildet wird, die zum hinteren Rumpfende hin bogenförmig sind, wobei auch der zweite Flügel (4) von zwei Halbflügeln (4a, 4b) gebildet wird, die zum vorderen Rumpfende hin bogenförmig sind und wobei erster und zweiter Flügel mit einander verbunden sind und hierzu in entsprechender Zuordnung zu den beiden Halbflügeln auf jeder Rumpfseite starre, aerodynamische Flächen (5a, 5b) vorgesehen sind,
**dadurch gekennzeichnet,**
**dass** sich der eine der beiden Flügel im Bereich der Oberseite, der andere Flügel im Bereich der Unterseite des Rumpfes sich erstreckt.

2. Flugzeug nach Anspruch 1, bei dem der erste Flügel (3) in einer Ebene oberhalb der Ebene liegt, in der der zweite Flügel (4) angeordnet ist.

3. Flugzeug nach Anspruch 1, bei dem der erste Flügel (3) in einer Ebene unterhalb der Ebene liegt, in der der zweite Flügel angeordnet ist.

4. Flugzeug nach den vorstehenden Ansprüchen, bei dem die aerodynamischen Flächen (5a, 5b) mit der jeweiligen Halbflügelspitze verbunden sind.

5. Flugzeug nach den Ansprüchen 1, 2 und 3, bei dem die jeweilige der aerodynamischen Flächen (5a, 5b) mit einem Zwischenpunkt von zumindest einem der Halbflügel verbunden ist.

6. Flugzeug nach den vorstehenden Ansprüchen, bei dem die starren aerodynamischen Flächen (5a, 5b) verstellbare Steuerflächen (20, 21) aufweisen.

7. Flugzeug nach den vorstehenden Ansprüchen, bei dem der zweite Flügel (4) einen positiven Raumwinkel hat.

8. Flugzeug nach den vorstehenden Ansprüchen, bei dem der erste Flügel (3) einen positiven Raumwinkel hat.

9. Flugzeug nach Anspruch 1, bei dem eine Landeeinrichtung im Flugzeugrumpf nahe dem Flugzeugschwerpunkt angeordnet ist.

10. Flugzeug nach Anspruch 4, bei dem die Spitzen der Halbflügel (3a, 4a und 3b, 4b), die durch die aerodynamischen Flächen (a5, 5b) miteinander verbunden sind, unmittelbar oder versetzt relativ zueinander angeordnet sind.

11. Flugzeug nach Anspruch 5, beiu dem einer von erstem und zweitem Flügel länger als der andere ist und mit diesem in einem Zwischenpunkt mittels der jeweiligen der aerodynamischen Flächen verbunden ist.

12. Flugzeug nach den vorstehenden Ansprüchen, bei dem erster und zweiter Flügel (3, 4) vorgespannt sind, mit selbstausgleichendem, vorgespanntem Zustand in einander gegenüberliegenden Fixpunkten und im Biege- und Torsionstyp mittels der aerodynamischen Flächen (5a, 5b).

13. Flugzeug nach den vorstehenden Ansprüchen, bei dem auf dem zweiten Flügel (4) zur Steuerung in Querrichtung verstellbare Flächen (16a, 16b) vorgesehen sind.

14. Flugzeug nach den vorhergehenden Ansprüchen, bei dem für einen großen Teil des ersten Flügels (3) Flügelklappen (15a, 16b) vorgesehen sind, die für den Start zu einer etwa elliptischen Flügelform führen.

15. Flugzeug nach den vorstehenden Ansprüchen, bei dem die Flügel aus Verbundmaterial, laminiertem Material und/oder einem Kombinationmaterial aus beiden bestehen.

16. Flugzeug nach den vorhergehenden Ansprüchen, bei dem auf dem ersten Flügel (3) und auf dem zweiten Flügel (4) beiderseits des Rumpfes und nahe ihm verstellbare Steuerflächen (13a, 13b, 14a, 14b) vorgesehen sind.

## Revendications

1. Un grand avion de transport pour une capacité d'emport plus grande que 450 places, comprenant un fuselage (1) ayant plus étages pour passagers et une dérive (2), une première aile (3) s'étendant d'un point intermédiaire dudit fuselage (1), une seconde aile (4) s'étendant de la partie postérieure dudit fuselage, lesdites première et seconde ailes se trouvant sur deux planes espacés verticalement, ladite première aile (3) étant formée par deux demi-ailes (3a, 3b) inclinées vers la partie postérieure dudit fuselage, ladite seconde aile (4) étant formée par deux demi-ailes (4a, 4b) inclinées vers la partie antérieure du fuselage, lesdites première et seconde ailes étant jointes l'une à l'autre au moyen de respectives surfaces aérodynamiques rigides en correspondance avec les respectives demi-ailes qui se trouvent du même côté du fuselage, **caractérisé en ce que** l'un desdites première et seconde ailes s'étend de la partie plus haute du fuselage et l'autre s'étend de la partie de fond du fuselage.

2. L'avion selon la revendication 1, dans lequel ladite première aile (3) est située à un niveau plus haut que la dite seconde aile (4).

3. L'avion selon la revendication 1, dans lequel ladite première aile (3) est située à un niveau plus bas que la dite seconde aile (4)

4. L'avion selon les revendications précédentes, dans lequel lesdites surfaces aérodynamiques (5a,5b) sont jointes aux extrémités des respectives demi-ailes.

5. L'avion selon les revendications 1, 2 et 3, dans lequel lesdites surfaces aérodynamiques (5a/ 5b) sont jointes respectivement à un point intermédiaire du au moins un desdites demi-ailes.

6. L'avion selon les revendications précédentes, dans lequel lesdites surfaces aérodynamiques rigides (5a, 5b) ont des surfaces mobiles de contrôle (20,21).

7. L'avion selon les revendications précédentes, dans lequel ladite seconde aile (4) a un angle dièdre positif.

8. L'avion selon les revendications précédentes, dans lequel ladite première aile (3) a un angle dièdre positif.

9. L'avion selon les revendications précédentes, dans lequel un train d'atterrissage principal est logé dans le fuselage en proximité du barycentre de l'avion.

10. L'avion selon la revendication 4, dans lequel les extrémités des demi-ailes (3a,4a et 3b,4b) jointes par lesdites surfaces aérodynamiques (5a,5b) sont alignées verticalement ou décalées l'une par rapport à l'autre.

11. L'avion selon la revendication 5, dans lequel une desdites première ou seconde ailes est plus longue que l'autre, laquelle est jointe à un point intermédiaire au moyen des surfaces aérodynamiques respectives.

12. L'avion selon les revendications précédentes, dans lequel lesdites première et seconde ailes (3,4) sont prechargée au moyen d'états de contrainte préalable auto-équilibrants aux signes opposés et de type flexionnel ou torsionnel.

13. L'avion selon les revendications précédentes, dans lequel des surfaces mobiles (16a,16b) sont placées sur ledit seconde aile (4) pour les contrôles latéral-directionnels.

14. L'avion selon les revendications précédentes, dans lequel des ailerons (15a,15b) sont prévus sur une importante partie de ladite première aile (3), de sorte que la distribution de la portance, quand les ailerons sont étendus, a approximativement une forme elliptique.

15. L'avion selon les revendications précédentes, dans lequel les ailes sont faites en un matériel composite, un matériel laminé et/ou la combinaison des deux.

16. L'avion selon les revendications précédentes, dans lequel sont prévues des surfaces mobiles de contrôle (13a, 13b, 14a, 14b) sur ladite première aile (3) et ladite seconde aile (4), sur chaque côté du fuselage et en proximité du fuselage.
